# EUROPÄISCHE PATENTANMELDUNG

(11) **EP 2 293 378 A1**
(43) Veröffentlichungstag der Anmeldung: **09.03.2011**
(21) Anmeldenummer: 09010800.2
(22) Anmeldetag: 24.08.2009
(51) Int. Cl.: H01Q 1/12, H01Q 3/08

(54) **Einrichtung mit einem ausrichtbaren Parabolspiegel**

(71) Anmelder: Zimmermann, Jürgen, 6900 Bregenz (AT)
(72) Erfinder: Klien, Stefan, Dipl.-Ing. (FH), 6845 Hohenems (AT); Zimmermann, Jürgen, 6900 Bregenz (AT)
(74) Vertreter: Fechner, Thomas

(57) **Zusammenfassung**

Bei einer Einrichtung mit einem durch Nachführsystem ausrichtbaren Parabolspiegel (1), der um eine obere Achse (7) verschwenkbar mit einer Schwenkeinheit (3) verbunden ist, welche ihrerseits um eine horizontale untere Achse (6) verschwenkbar mit einer Abstützung (4) verbunden ist, ist die Schwenkeinheit (3) mittels eines unteren Stellantriebs (8) um die untere Achse (6) verschwenkbar und der Parabolspiegel (1) mittels eines oberen Stellantriebs (11) um die obere Achse (7) verschwenkbar, die rechtwinkelig zur unteren Achse (6) steht und in einer auf die Verschwenkung der Schwenkeinheit (3) um die untere Achse (6) bezogenen Neutralstellung der Schwenkeinheit (3) horizontal liegt. Die Schwenkeinheit (3) weist einen Basisabschnitt (14) und mindestens einen von diesem in der auf die Verschwenkung der Schwenkeinheit (3) um die untere Achse (6) bezogenen Neutralstellung der Schwenkeinheit (3) nach oben abstehenden oberen Lagerabschnitt (15,16) auf, an dem der Parabolspiegel (1) oder mindestens ein mit ihm starr verbundenes Lagerteil um die obere Achse (7) verschwenkbar gelagert ist. Die Schwenkeinheit (3) weist weiters mindestens einen vom Basisabschnitt (14) in der auf die Verschwenkung der Schwenkeinheit (3) um die untere Achse (6) bezogenen Neutralstellung der Schwenkeinheit (3) nach unten abstehenden unteren Lagerabschnitt (18,19) auf, an dem die Schwenkeinheit (3) gegenüber der Abstützung (4) um die untere Achse (6) verschwenkbar gelagert ist.

## Beschreibung

Die Erfindung bezieht sich auf eine Einrichtung mit einem ausrichtbaren Parabolspiegel, der um eine obere Achse verschwenkbar mit einer Schwenkeinheit verbunden ist, welche ihrerseits um eine horizontale untere Achse verschwenkbar mit einer Abstützung verbunden ist, wobei die Schwenkeinheit mittels eines unteren Stellantriebs um die untere Achse verschwenkbar ist und der Parabolspiegel mittels eines oberen Stellantriebs um die obere Achse verschwenkbar ist, die rechtwinkelig zur unteren Achse steht und in einer auf die Verschwenkung der Schwenkeinheit um die untere Achse bezogenen Neutralstellung der Schwenkeinheit horizontal liegt, und wobei die Schwenkeinheit einen Basisabschnitt und mindestens einen von diesem in der auf die Verschwenkung der Schwenkeinheit um die untere Achse bezogenen Neutralstellung der Schwenkeinheit nach oben abstehenden oberen Lagerabschnitt aufweist, an dem der Parabolspiegel oder mindestens ein mit ihm starr verbundenes Lagerteil um die obere Achse verschwenkbar gelagert ist.

Parabolspiegel werden beispielsweise in Parabolantennen eingesetzt, um Mikrowellenstrahlung im Brennpunkt des Parabolspiegels zu bündeln. Dort wird die Strahlung von einem Detektor erfasst oder von einem Reflektor, beispielsweise Hornstrahler, durch eine Öffnung im Parabolspiegel auf einen Detektor reflektiert.

Zur Kommunikation mit erdnahen Satteliten verwendet man Parabolspiegel mit Durchmessern von 10m und mehr. Große Parabolantennen mit Durchmessern von bis zu 100m findet man in den Bodenstationen zur Überwachung und Steuerung von interplanetaren Raumflugkörpern, bei Radioteleskopen und bei Radargeräten zur extraterrestrischen Anwendung.

Eine herkömmliche Ausbildungsform einer Parabolantenne weist einen Parabolspiegel in Form eines rotationssymmetrischen Gebildes (Paraboloid) auf, dessen Schnittbild eine Parabel ist. Der Erreger (Empfangs- oder Sendeteil) befindet sich im Brennpunkt des Paraboloids auf der Rotationsachse (kein Offset) oder außerhalb der Rotationsachse (Offset). Die Bauform ohne Offset wird besonders bei großen Antennen angewandt. Eine weitere Bauform einer herkömmlichen Parabolantenne sind die Cassegrain-Antennen, bei denen sich an der Stelle des Erregers ein Subreflektor befindet. Der Erreger ist dann meist in einem Loch im Zentrum der Parabolfläche angeordnet. Eine andere Bauform mit einem Subreflektor sind die sogenannten Gregory-Antennen.

Bei einem bekannten Nachführsystem bzw. einer Stelleinrichtung zum Ausrichten einer Parabolantenne ist die Parabolantenne um eine horizontale Achse (Elevations-Achse) verschwenkbar mit einer Schwenkeinheit verbunden, die ihrerseits durch einen Drehkranz um eine vertikale Achse (Azimut-Achse) verschwenkbar auf einem Fuß angeordnet ist. Der Fertigungsaufwand ist hier relativ hoch. Anstelle der Ausbildung mit einem Drehkranz ist es auch bekannt, für die Verschwenkung um die Azimut-Achse einen Linearantrieb einzusetzen. Der Schwenkwinkel ist hierbei entsprechend begrenzt.

Weiters bekannt sind Sonnen-Nachführeinrichtungen für Fotovoltaikanlagen in unterschiedlichen Ausführungsformen. In einer üblichen Ausführungsform ist ein die Solarzellen tragendes Traggestell einerseits um eine vertikale Achse (Azimut-Achse) andererseits um eine horizontale Achse (Elevations-Achse) verschwenkbar. Zur Ausbildung der vertikalen Achse werden Drehkränze eingesetzt, welche beispielsweise Verzahnungen aufweisen, mit denen ein rotatorischer Stellantrieb zusammenwirkt.

Sonnen-Nachführeinrichtungen für Fotovoltaikanlagen gehen beispielsweise aus der WO 93/13396 und US 2007/0215199 A1 hervor.

Aufgabe der Erfindung ist es eine Einrichtung der eingangs genannten Art bereitzustellen, bei der bei einer einfachen Ausbildung ein großer Stellbereich ermöglicht wird. Erfindungsgemäß gelingt dies durch eine Einrichtung mit den Merkmalen des Anspruchs 1.

Durch die Ausbildung der Schwenkeinheit mit - bezogen auf eine Neutralstellung der Verschwenkung um die untere Achse - sowohl mindestens einem vom Basisabschnitt nach oben abstehenden oberen Lagerabschnitt, an dem der Parabolspiegel oder das mit ihm starr verbundene Lagerteil um die obere Achse verschwenkbar gelagert ist, als auch mindestens einem vom Basisabschnitt nach unten abstehenden unteren Lagerabschnitt, an dem die Schwenkeinheit gegenüber der Abstützung um die untere Achse verschwenkbar gelagert ist, kann ein großer möglicher Schwenkbereich um die untere Achse erreicht werden. Vorzugsweise beträgt der Schwenkbereich um die untere Achse ausgehend von der Neutralstellung der Schwenkeinheit in beide Schwenkrichtungen zumindest 70°, besonders bevorzugt mindestens 90°.

In einer vorteilhaften Ausführungsform der Erfindung ist der Parabolspiegel um die obere Achse um mindestens 60° verschwenkbar, wobei ein Wert von mindestens 80° besonders bevorzugt ist. Günstigerweise steht hierzu der mindestens eine obere Lagerabschnitt vom Basisabschnitt der Schwenkeinheit schräg nach oben ab.

Aus Stabilitätsgründen ist es vorteilhaft, wenn mindestens zwei untere Lagerabschnitte vorhanden sind, mittels denen mindestens zwei separate in Richtung der unteren Achse voneinander beabstandete Schwenklager ausgebildet werden. Um einen möglichst großen Schwenkwinkel um die obere Achse zu erreichen, ist hierbei vorzugsweise eine die obere Achse aufweisende und rechtwinkelig zur unteren Achse stehende Ebene seitlich neben den mindestens zwei unteren Lagerabschnitten angeordnet (also nicht im Bereich zwischen den beiden unteren Lagerabschnitten bzw., falls mehr als zwei untere Lagerabschnitte vorhanden sind, nicht im Bereich zwischen den zwei äußeren unteren Lagerabschnitten).

Weiters ist es aus Stabilitätsgründen vorteilhaft, wenn mindestens zwei obere Lagerabschnitte vorhanden sind, mittels denen mindestens zwei separate in Richtung der oberen Achse voneinander beabstandete Schwenklager ausgebildet werden.

In einer vorteilhaften Ausführungsform der Erfindung greift der obere Stellantrieb einerseits am Parabolspiegel oder an mindestens einem mit diesem starr verbundenen Lagerteil an, wobei er am Parabolspiegel selbst oder am mindestens einem mit diesem starr verbundenen Lagerteil angelenkt ist, andererseits an einem Arm der Schwenkeinheit oder an mindestens einem starr mit diesem verbundenen Lagerteil. Hierbei steht der Arm vom Bereich des Basisabschnitts der Schwenkeinheit, von dem der mindestens eine obere Lagerabschnitt und der mindestens eine untere Lagerabschnitt ausgehen, horizontal oder zumindest im Wesentlichen horizontal ab, d.h. in einem Winkel im Bereich von +/- 30° zur Horizontalen. Der obere Stellantrieb ist hierbei direkt am Arm angelenkt, vorzugsweise im Bereich von dessen freiem Ende, oder am mindestens einen mit dem Arm, vorzugsweise im Bereich von dessen freiem Ende, starr verbundenen Lagerteil angelenkt. Es kann hierbei bei einer einfachen Ausbildung ein großer durch den oberen Stellantrieb einstellbarer Schwenkwinkel um die obere Achse erreicht werden.

Eine erfindungsgemäße Einrichtung mit einem ausrichtbaren Parabolspiegel kann eine Antenne zum Empfangen und/oder Senden von elektromagnetischen Wellen sein. Beispielsweise kann eine solche Antenne eine Richtantenne (für eine Richtfunkverbindung), eine Radarantenne, eine Sattelitenantenne, eine WLA-Antenne oder eine andere Antenne bilden. Eine erfindungsgemäße Einrichtung mit einem ausrichtbaren Parabolspiegel kann auch einen Sonnenspiegel bzw. Solarspiegel zum Empfangen von Sonnenstrahlung bzw. Aufnehmen von Sonnenenergie bilden. Beispielsweise kann bei einem solchen Sonnenspiegel im Brennpunkt ein Verdampfer angeordnet sein, um ein Wärmekraftwerk auszubilden. Solche Solarspiegel werden auch als Solarantennen bezeichnet. Weiters kann eine erfindungsgemäße Einrichtung Teil eines Wärmekraftwerks bilden, wobei mehrere auf die gleiche Stelle fokussierte, als Parabolspiegel ausgebildete Solarspiegel eingesetzt werden.

Falls der Parabolspiegel auf den Sonnenstand auszurichten ist, so ist vorzugsweise die untere Achse in die Nord-Süd-Richtung ausgerichtet und die obere Achse in der Neutralstellung der Schwenkeinheit bezüglich der Verschwenkung um die untere Achse in die Ost-West-Richtung ausgerichtet.

Weitere Vorteile und Einzelheiten der Erfindung werden im Folgenden anhand der beiliegenden Zeichnung erläutert. In dieser zeigen:
Fig. 1 eine Schrägsicht eines Ausführungsbeispiels einer erfindungsgemäßen Einrichtung, wobei Neutralstellungen bezüglich der Verschwenkung um die untere Achse und die obere Achse eingenommen sind (= "Nullstellung");
Fig. 2 eine Schrägsicht der Einrichtung von Fig. 1 in einer demgegenüber verschwenkten Stellung;
Fig. 3 eine Seitenansicht der Einrichtung, Blickrichtung A in Fig. 7, in der Stellung entsprechend Fig. 1;
Fig. 4 und 5 Seitenansichten entsprechend Fig. 3, in den gegenüber der Nullstellung maximal um die untere Achse in die beiden Schwenkrichtungen verschwenkten Stellungen; Fig. 6 eine Schrägsicht einer weiteren gegenüber der Nullstellung um die untere Achse verschwenkten Stellung (im Bereich zwischen der Neutralstellung und maximal verschwenkten Stellung);
Fig. 7 eine Seitenansicht in der Nullstellung, Blickrichtung B in Fig. 3;
Fig. 8 eine Seitenansicht entsprechend Fig. 7, aber in einer gegenüber der Nullstellung um die obere Achse verschwenkten Stellung (in einer mittleren Stellung zwischen der Neutralstellung und der maximal verschwenkten Stellung);
Fig. 9 eine Seitenansicht entsprechend Fig. 8, aber im maximal um die obere Achse verschwenkten Zustand;
Fig. 10 eine Schrägsicht der Einrichtung in einer weiteren gegenüber der Nullstellung um die obere Achse verschwenkten Stellung (in einer Stellung zwischen der Neutralstellung und der maximal verschwenkten Stellung);
Fig. 11 einen vergrößerten Ausschnitt von Fig. 10.

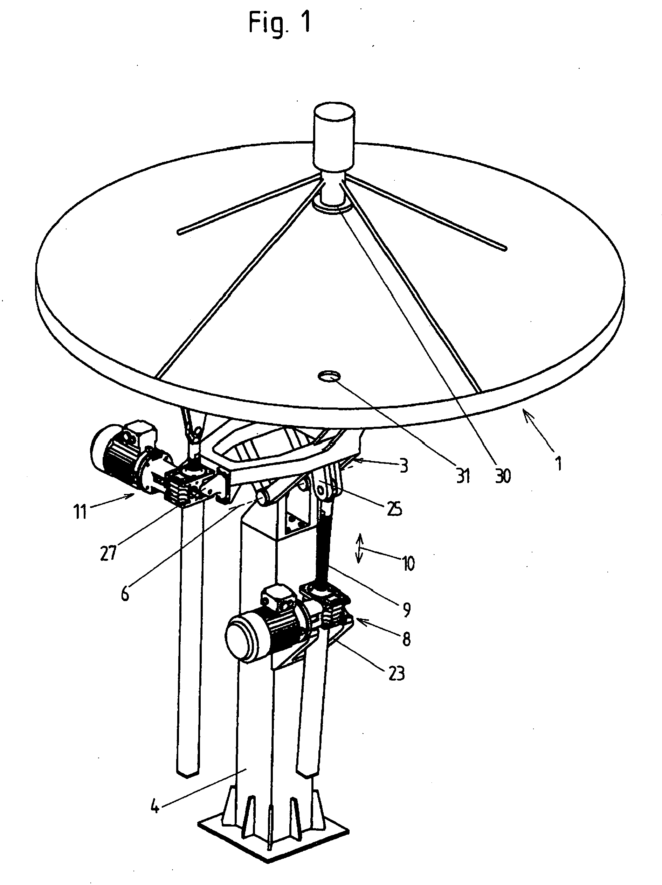

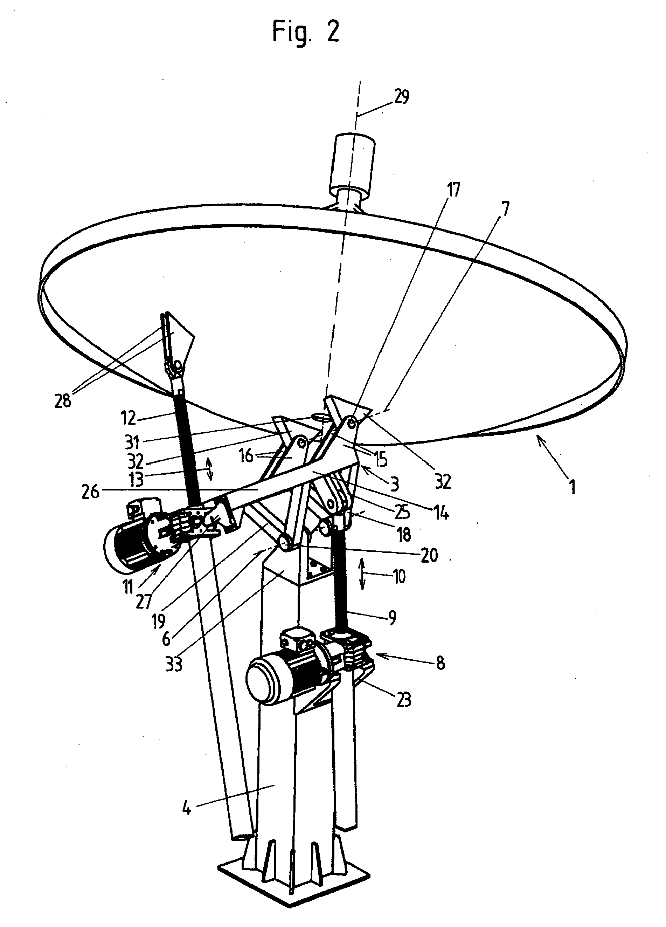

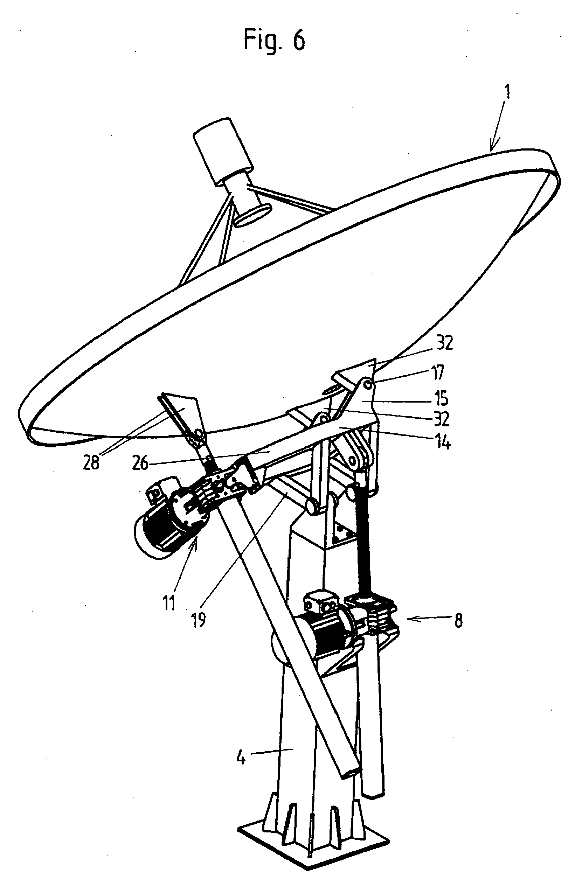

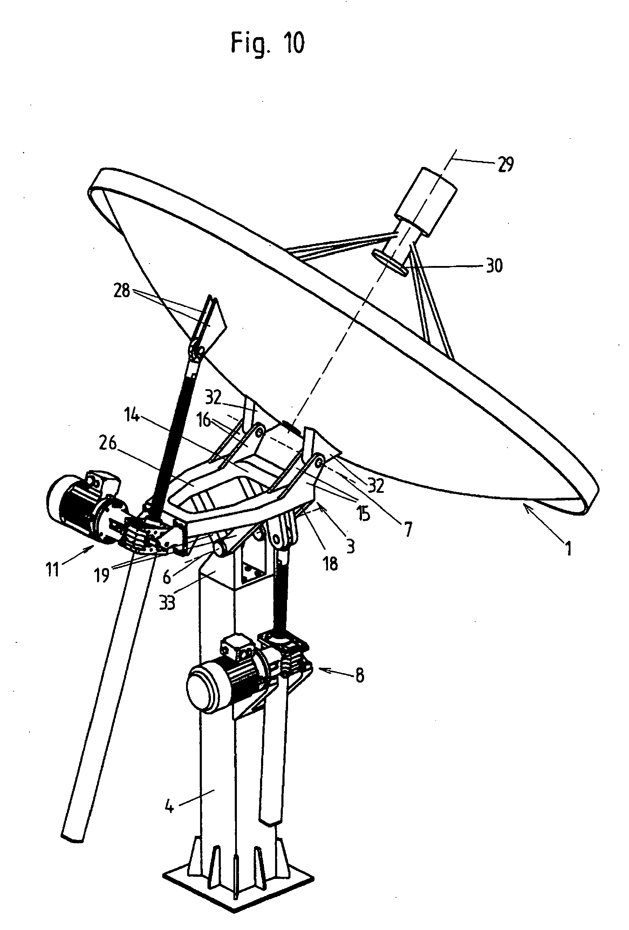

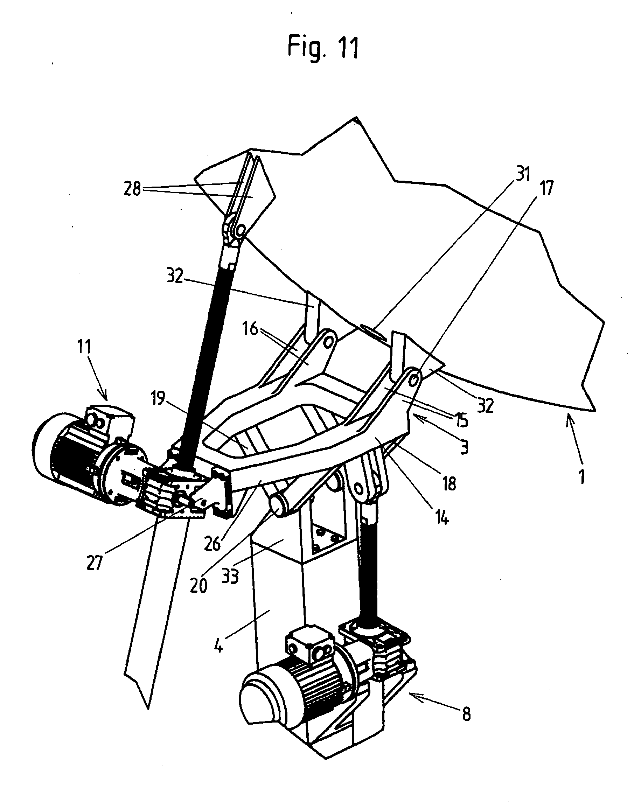

Ein Ausführungsbeispiel einer Einrichtung gemäß der Erfindung wird im Folgenden anhand der Fig. 1 bis 11 erläutert. In der gezeigten Ausführungsform ist der Parabolspiegel 1 Teil einer Parabolantenne. Unterschiedliche Ausbildungen von solchen Parabolantennen sind bekannt. Hier ist im Brennpunkt des Paraboloids ein Reflektor 30, insbesondere in Form eines Hornstrahlers, angeordnet, der die Strahlung zu einer Öffnung 31 im Zentrum des Parabolspiegels 1 reflektiert. Die an dieser Stelle anzuordnende Empfangs- und/oder Sendeeinheit (je nachdem ob es sich um eine Empfangs- oder Sendeantenne oder eine Kombination hiervon handelt) ist der Einfachheit halber nicht dargestellt.

Statt einer Ausbildung in Form der gezeigten Parabolantenne könnte die Erfindung auch als eine andere Einrichtung mit einem ausrichtbaren Parabolspiegel ausgebildet sein.

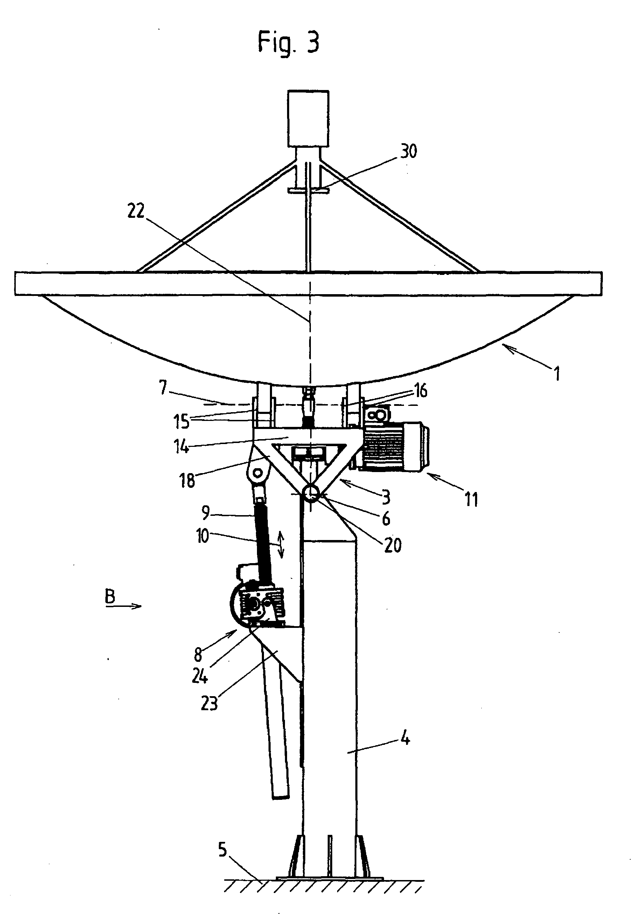

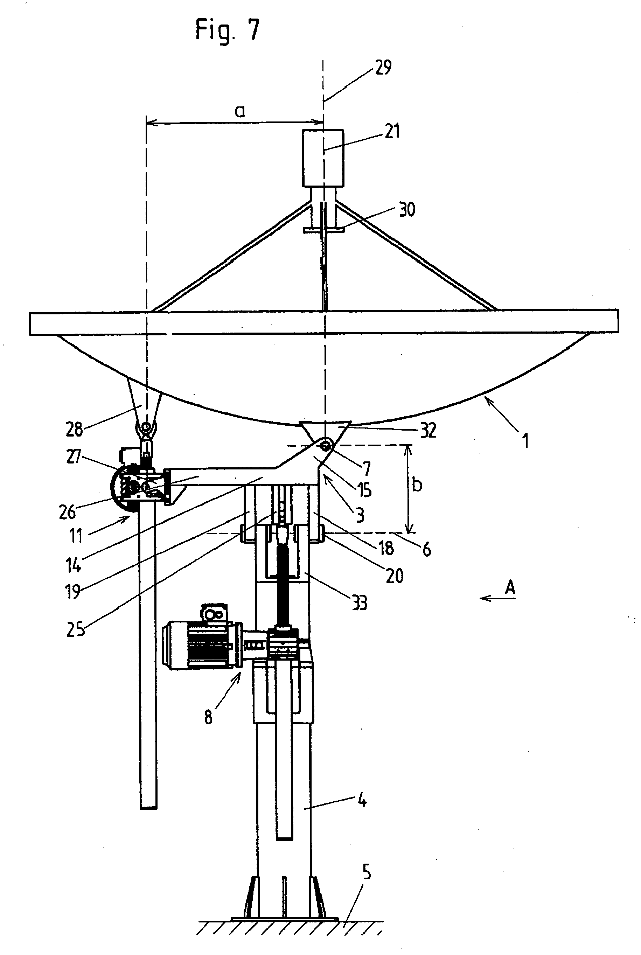

Eine Schwenkeinheit 3 ist einerseits mit dem Parabolspiegel 1, andererseits mit einer Abstützung 4, die gegenüber dem Untergrund 5 (in den Fig. 3 und 7 angedeutet) fest verankert ist, verschwenkbar verbunden. Die Abstützung 4 weist hier die Form eines turmartigen Stehers auf. Gegenüber der Abstützung 4 ist die Schwenkeinheit 3 um eine horizontale untere Achse 6 verschwenkbar und der Parabolspiegel 1 ist gegenüber der Schwenkeinheit 3 um eine obere Achse 7 verschwenkbar, die rechtwinkelig zur unteren Achse 6 steht. In der in den Fig. 1, 3 und 7 dargestellten Schwenkstellung der Schwenkeinheit 3 bezüglich der Verschwenkung um die untere Achse 6 liegt die obere Achse 7 horizontal. Diese Schwenkstellung der Schwenkeinheit 3 bezüglich der unteren Achse 6, in der die obere Achse 7 horizontal liegt, wird in der vorliegenden Schrift als "Neutralstellung" bezüglich der Verschwenkung um die untere Achse 6 bezeichnet.

Wenn in der Neutralstellung der Schwenkeinheit 3 bezüglich der Verschwenkung um die untere Achse 6 der Parabolspiegel 1 die in den Fig. 1, 3 und 7 dargestellte Schwenkstellung um die obere Achse 7 einnimmt, so liegt die Achse 29 des Parabolspiegels 1 vertikal. Die hierbei eingenommene Schwenkstellung des Parabolspiegels 1 um die obere Achse 7 wird in der vorliegenden Schrift als "Neutralstellung" bezüglich der Verschwenkung um die obere Achse 7 bezeichnet. Wenn sowohl die Neutralstellung bezüglich der Verschwenkung um die untere Achse 6 als auch die Neutralstellung bezüglich der Verschwenkung um die obere Achse 7 eingenommen wird, so wird diese Stellung in der vorliegenden Schrift als "Nullstellung" bezeichnet. Die Nullstellung ist in den Fig. 1, 3 und 7 dargestellt.

Zur Einstellung des Schwenkwinkels der Schwenkeinheit 3 um die untere Achse 6 dient ein unterer Stellantrieb 8. Dieser weist ein in und entgegen einer geradlinigen Stellrichtung 10 verstellbares Stellteil 9 auf. Beispielsweise ist der Stellantrieb 8 in Form eines Spindelantriebs ausgebildet (solche Spindelantriebe werden teilweise auch als Spindelhubgetriebe bezeichnet).

Zur Einstellung des Schwenkwinkels des Parabolspiegels 1 um die obere Achse 7 dient ein oberer Stellantrieb 11. Dieser weist ein gradlinig in und entgegen einer Stellrichtung 13 verstellbares Stellteil 12 auf. Beispielsweise ist der obere Stellantrieb 11 als Spindelantrieb ausgebildet.

Die Schwenkeinheit 3 umfasst einen Basisabschnitt 14. Vom Basisabschnitt 14 stehen bezogen auf die Neutralstellung bezüglich der Verschwenkung um die untere Achse 6 zwei obere Lagerabschnitte 15, 16 nach oben ab, wobei sie insbesondere wie dargestellt schräg nach oben verlaufen. Diese oberen Lagerabschnitte 15, 16 dienen (im Bereich ihrer oberen Enden) zur Ausbildung von Schwenklagern für den Parabolspiegel 1.

Im gezeigten Ausführungsbeispiel wird ein jeweiliger oberer Lagerabschnitt 15, 16 von zwei parallelen Laschen ausgebildet, zwischen denen ein den Parabolspiegel 1 drehbar lagernder Lagerbolzen 17 verläuft. Andere Ausbildungen der oberen Lagerabschnitte 15, 16, beispielsweise in Form von Lagerböcken mit winkelig zueinander stehenden Streben, sind denkbar und möglich. Aus Stabilitätsgründen ist es bevorzugt, dass mindestens zwei obere Lagerabschnitte 15, 16 vorhanden sind, mittels denen mindestens zwei separate in Richtung der oberen Achse 7 voneinander beabstandete Schwenklager ausgebildet werden. Auch mehr als zwei solche oberen Lagerabschnitte 15, 16 könnten vorhanden sein.

Die oberen Lagerabschnitte 15, 16 sind im gezeigten Ausführungsbeispiel mit Lagerteilen 32 verschwenkbar verbunden, die starr am Parabolspiegel 1 befestigt sind. Die Lagerteile 32 können beispielsweise wie dargestellt in Form von Lagerlaschen oder in Form von Lagerböcken ausgebildet sein. Auch eine ein einzelnes U-förmig ausgebildetes Lagerteil oder eine einstückige Ausbildung mit dem Parabolspiegel 1 ist denkbar und möglich.

Vom Basisabschnitt 14 stehen weiters - bezogen auf die Neutralstellung der Verschwenkung der Schwenkeinheit 3 um die untere Achse 6-zwei untere Lagerabschnitte 18, 19 nach unten ab. Diese dienen (im Bereich ihrer unteren Enden) zur Ausbildung von Schwenklagern zur schwenkbaren Lagerung der Schwenkeinheit 3 gegenüber der Abstützung 4.

Im gezeigten Ausführungsbeispiel werden die unteren Lagerabschnitte 18, 19 jeweils von einem Lagerbock ausgebildet, der von zwei nach unten hin zusammenlaufenden und an ihren unteren Enden miteinander verbundenen Streben gebildet wird. Auf diese Weise werden nach unten sich verjüngende untere Lagerabschnitte 18, 19 ausgebildet. Auch andere Ausbildungen von solchen nach unten sich verjüngenden unteren Lagerabschnitten sind denkbar und möglich, beispielsweise mittels Lagerlaschen. Vorzugsweise sind die unteren Lagerabschnitte 18, 19 dreiecksförmig mit nach unten weisender Spitze ausgebildet.

Aus Stabilitätsgründen ist es bevorzugt, dass mindestens zwei untere Lagerabschnitte 18, 19 vorhanden sind, mittels denen mindestens zwei separate in Richtung der unteren Achse 6 voneinander beabstandete Schwenklager ausgebildet werden. Auch mehr als zwei solche unteren Lagerabschnitte 18, 19 könnten vorgesehen sein. Die Ausbildung von Schwenklagern erfolgt mittels Lagerbolzen 20.

Die unteren Lagerabschnitte 18, 19 sind im gezeigten Ausführungsbeispiel mit einem Lagerteil 33 verschwenkbar verbunden, das starr am oberen Ende des Stehers der Abstützung 4 angebracht ist. Das Lagerteil ist hier U-förmig ausgebildet mit Seitenwangen, an denen die Anlenkung an den unteren Lagerabschnitten 18, 19 erfolgt. Auch separate Lagerteile für jeden der Lagerabschnitte 18, 19 oder eine einstückige Ausbildung mit dem Steher der Abstützung 4 sind denkbar und möglich.

Die Schwenkeinheit 3 kann einteilig oder mehrteilig aus mehreren starr miteinander verbundenen Teilen ausgebildet sein.

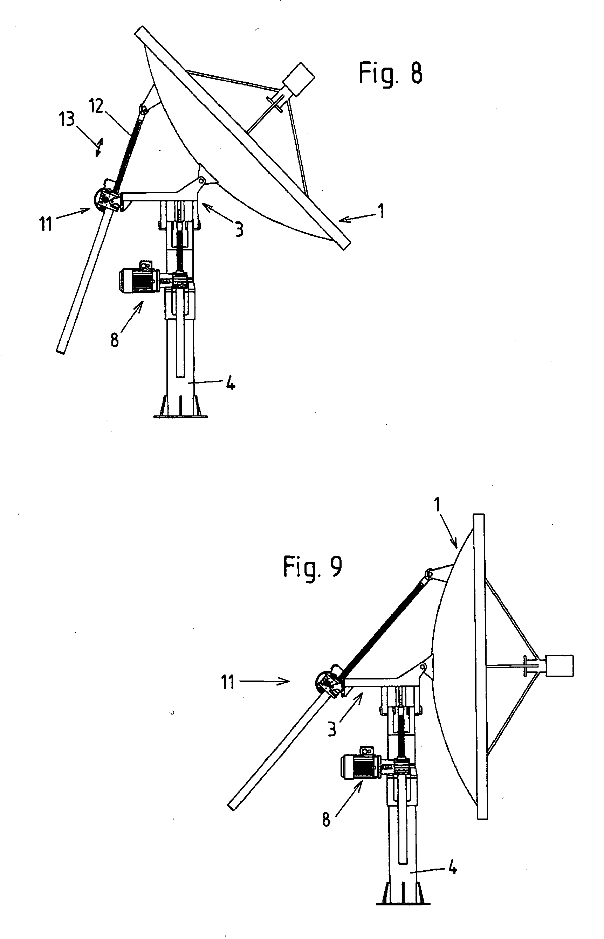

Im gezeigten Ausführungsbeispiel liegt die Ebene 21 (vgl. Fig. 7), in der die obere Achse 7 liegt und die rechtwinkelig zur unteren Achse 6 steht, seitlich neben den beiden unteren Lagerabschnitten 18, 19. Es kann dadurch vorzugsweise eine Verschwenkbarkeit um die obere Achse 7 bis zur horizontalen Ausrichtung der Achse 29 des Parabolspiegels 1 erreicht werden, wenn sich die Schwenkeinheit 3 in einer beliebigen Schwenkstellung bezüglich der unteren Achse 6 befindet (vgl. Fig. 9).

Die Ebene 22, in der die untere Achse 6 liegt und die rechtwinkelig zur oberen Achse 7 steht, liegt zwischen den beiden oberen Lagerabschnitten 15, 16 (vgl. Fig. 3).

Der untere Stellantrieb 8 greift einerseits an der Abstützung 4 an, und zwar über eine am Steher der Abstützung 4 starr befestigte Konsole 23, an der Lagerböcke 24 befestigt sind, an denen der untere Stellantrieb 8 angelenkt ist. Andererseits greift der untere Stellantrieb 8 an einem Verbindungsstück 25 an, welches bezogen auf die Neutralstellung der Schwenkeinheit 3 bezüglich einer Verschwenkung um die untere Achse 6 vom Basisabschnitt 14 der Schwenkeinheit 3 nach unten absteht. Der untere Stellantrieb 8 ist an diesem Verbindungsstück 25 angelenkt.

Der obere Stellantrieb 11 ist einerseits starr am Parabolspiegel 1 angebrachten Lagerteilen 28 angelenkt, die hier von Lagerlaschen oder Lagerböcken gebildet werden. Auch eine ein einzelnes U-förmig ausgebildetes Lagerteil oder eine einstückige Ausbildung der Lagerteile 28 mit dem Parabolspiegel 1 ist denkbar und möglich. Andererseits ist der obere Stellantrieb 11 an Lagerteilen 27 angelenkt, die starr an einem Arm 26 der Schwenkeinheit 3 befestigt sind. Die Lagerteile 27 sind hier in Form von Lagerböcken ausgebildet. Auch ein einzelnes U-förmig ausgebildetes Lagerteil oder eine Ausbildung der Anlenkung einstückig mit dem Arm 26 ist denkbar und möglich. Der Arm 26 stellt einen horizontal oder zumindest im Wesentlichen horizontal abstehenden Abschnitt des Basisabschnitts 14 der Schwenkeinheit 3 dar, wobei er vom Bereich des Basisabschnitts 14 absteht, von dem die oberen Lagerabschnitte 15, 16 und die unteren Lagerabschnitte 18, 19 ausgehen. Die Verbindungsstelle des oberen Stellantriebs 11 mit dem Arm 26 bzw. mit den am Arm 26 angebrachten Lagerteilen 27 weist hierbei von der Ebene 21 einen Normalabstand a auf, der mindestens die Hälfte des Normalabstands b zwischen der unteren Achse 6 und der oberen Achse 7 beträgt, vorzugsweise mindestens den gesamten Normalabstand b beträgt (vgl. Fig. 7).

Die Nullstellung, in der die Achse 29 des Parabolspiegels 1 vertikal liegt, kann z.B. beim Einwirken von größeren Windlasten eingenommen werden.

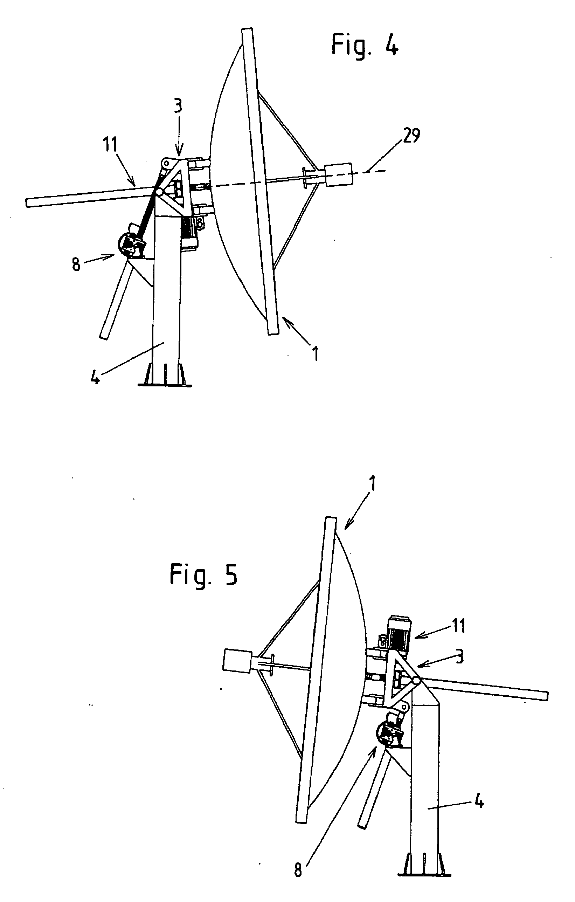

Ausgehend von der Neutralstellung bezüglich der unteren Achse 6 kann die Schwenkeinheit 3 mittels des unteren Stellantriebs 8 in beide Schwenkrichtungen um die untere Achse 6 verschwenkt werden, vorzugsweise über einen Winkelbereich von bis zu jeweils mindestens 75° (vgl. Fig. 4 und 5). Ausgehend von der Neutralstellung bezüglich der oberen Achse 7 kann der Parabolspiegel 1 mittels des oberen Stellantriebs 11 in eine Richtung um die obere Achse 7 über einen Winkelbereich von zumindest mehr als 60° verschwenkt werden, im gezeigten Ausführungsbeispiel bis zu 90° (vgl. Fig. 9).

Durch gleichzeitige Verschwenkung der Schwenkeinheit 3 um die untere Achse 6 und des Parabolspiegels 1 um die obere Achse 7 kann die Achse 29 des Parabolspiegels 1 in eine gewünschte Raumrichtung ausgerichtet werden.

Die Abstützung 4 kann auch anders als in Form eines turmartigen Stehers ausgebildet sein.

### Legende zu den Hinweisziffern:

- 1: Parabolspiegel
- 3: Schwenkeinheit
- 4: Abstützung
- 5: Untergrund
- 6: untere Achse
- 7: obere Achse
- 8: unterer Stellantrieb
- 9: Stellteil
- 10: Stellrichtung
- 11: oberer Stellantrieb
- 12: Stellteil
- 13: Stellrichtung
- 14: Basisabschnitt
- 15: oberer Lagerabschnitt
- 16: oberer Lagerabschnitt
- 17: Lagerbolzen
- 18: unterer Lagerabschnitt
- 19: unterer Lagerabschnitt
- 20: Lagerbolzen
- 21: Ebene
- 22: Ebene
- 23: Konsole
- 24: Lagerbock
- 25: Verbindungsstück
- 26: Arm
- 27: Lagerteil
- 28: Lagerteil
- 29: Achse
- 30: Reflektor
- 31: Öffnung

## Patentansprüche

1. Einrichtung mit einem ausrichtbaren Parabolspiegel (1), der um eine obere Achse (7) verschwenkbar mit einer Schwenkeinheit (3) verbunden ist, welche ihrerseits um eine horizontale untere Achse (6) verschwenkbar mit einer Abstützung (4) verbunden ist, wobei die Schwenkeinheit (3) mittels eines unteren Stellantriebs (8) um die untere Achse (6) verschwenkbar ist und der Parabolspiegel (1) mittels eines oberen Stellantriebs (11) um die obere Achse (7) verschwenkbar ist, die rechtwinkelig zur unteren Achse (6) steht und in einer auf die Verschwenkung der Schwenkeinheit (3) um die untere Achse (6) bezogenen Neutralstellung der Schwenkeinheit (3) horizontal liegt, und wobei die Schwenkeinheit (3) einen Basisabschnitt (14) und mindestens einen von diesem in der auf die Verschwenkung der Schwenkeinheit (3) um die untere Achse (6) bezogenen Neutralstellung der Schwenkeinheit (3) nach oben abstehenden oberen Lagerabschnitt (15,16) aufweist, an dem der Parabolspiegel (1) oder mindestens ein mit ihm starr verbundenes Lagerteil um die obere Achse (7) verschwenkbar gelagert ist, **dadurch gekennzeichnet, dass** die Schwenkeinheit (3) weiters mindestens einen vom Basisabschnitt (14) in der auf die Verschwenkung der Schwenkeinheit (3) um die untere Achse (6) bezogenen Neutralstellung der Schwenkeinheit (3) nach unten abstehenden unteren Lagerabschnitt (18, 19) aufweist, an dem die Schwenkeinheit (3) gegenüber der Abstützung (4) um die untere Achse (6) verschwenkbar gelagert ist.

2. Einrichtung nach Anspruch 1, **dadurch gekennzeichnet, dass** der obere Stellantrieb (11) einerseits am Parabolspiegel (1) oder mindestens einem hiermit verbundenen Lagerteil (28), andererseits an einer Verbindungsstelle an der Schwenkeinheit (3) angreift, welche von einer Ebene (21), in der die obere Achse (7) liegt und die rechtwinkelig zur unteren Achse (6) steht, einen Normalabstand (a) aufweist, der mindestens die Hälfte des Normalabstands (b) zwischen der unteren Achse (6) und der oberen Achse (7) beträgt.

3. Einrichtung nach Anspruch 2, **dadurch gekennzeichnet, dass** die Verbindungsstelle an einem Arm (26) der Schwenkeinheit (3) oder einem hiermit starr verbundenen Lagerteil (27) angeordnet ist, wobei der Arm (26) von demjenigen Bereich des Basisabschnitts (14), von dem der mindestens eine obere Lagerabschnitt (15, 16) und der mindestens eine untere Lagerabschnitt (18, 19) ausgehen, in einem Winkel von weniger als 30° gegenüber der Horizontalen geneigt, vorzugsweise horizontal, absteht.

4. Einrichtung nach einem der Ansprüche 1 bis 3, **dadurch gekennzeichnet, dass** mindestens zwei obere Lagerabschnitte (15, 16) vorhanden sind, mittels denen mindestens zwei separate in Richtung der oberen Achse (7) voneinander beabstandete Schwenklager ausgebildet werden.

5. Einrichtung nach Anspruch 4, **dadurch gekennzeichnet, dass** eine die untere Achse (6) aufweisende, rechtwinkelig zur oberen Achse (7) stehende Ebene (22) zwischen den beiden oberen Lagerabschnitten (15, 16) liegt oder, falls mehr als zwei obere Lagerabschnitte (15, 16) vorhanden sind, zwischen den beiden äußeren der oberen Lagerabschnitte (15, 16) liegt.

6. Einrichtung nach einem der Ansprüche 1 bis 5, **dadurch gekennzeichnet, dass** mindestens zwei untere Lagerabschnitte (18, 19) vorhanden sind, mittels denen mindestens zwei separate in Richtung der unteren Achse (6) voneinander beabstandete Schwenklager ausgebildet werden.

7. Einrichtung nach Anspruch 6, **dadurch gekennzeichnet, dass** eine die obere Achse (7) aufweisende, rechtwinkelig zur unteren Achse (6) stehende Ebene (21) seitlich neben den mindestens zwei unteren Lagerabschnitten (18, 19) liegt.

8. Einrichtung nach einem der Ansprüche 1 bis 7, **dadurch gekennzeichnet, dass** die untere Achse (6) in Nord-Süd-Richtung ausgerichtet ist und die obere Achse (7) in der Neutralstellung der Schwenkeinheit (3) bezüglich der Verschwenkung um die untere Achse (6) in Ost-West-Richtung ausgerichtet ist.

9. Einrichtung nach einem der Ansprüche 1 bis 8, **dadurch gekennzeichnet, dass** ein jeweiliger oberer Lagerabschnitt (15, 16) in der auf die Verschwenkung der Schwenkeinheit (3) um die untere Achse (6) bezogenen Neutralstellung schräg nach oben absteht.

10. Einrichtung nach einem der Ansprüche 1 bis 9, **dadurch gekennzeichnet, dass** ein jeweiliger unterer Lagerabschnitt (18, 19) sich bezogen auf die Neutralstellung der Verschwenkung der Schwenkeinheit (3) um die untere Achse (6) nach unten verjüngt.

11. Einrichtung nach einem der Ansprüche 1 bis 10, **dadurch gekennzeichnet, dass** der untere Stellantrieb (8) einerseits an der Abstützung (4) oder an einem mit dieser starr verbundenen Teil (23), andererseits an einem von der Schwenkeinheit (3) in der auf die Verschwenkung der Schwenkeinheit (3) um die untere Achse (6) bezogenen Neutralstellung nach unten abstehenden Verbindungsstück (25) angreift.
